# EUROPÄISCHE PATENTSCHRIFT

(11) **EP 4 313 712 B1**
(45) Veröffentlichungstag und Bekanntmachung des Hinweises auf die Patenterteilung: **13.08.2025**
(21) Anmeldenummer: 22717355.6
(22) Anmeldetag: 18.03.2022
(51) Int. Cl.: B60W 60/00, G01C 21/34, G01C 21/00

(54) **COMPUTER-IMPLEMENTIERTES VERFAHREN ZUR ERMITTLUNG EINER POSITION EINES NACHFOLGEFAHRZEUGES**
COMPUTER-IMPLEMENTED METHOD FOR DETERMINING A POSITION OF A FOLLOWING VEHICLE
PROCÉDÉ MIS EN OEUVRE PAR ORDINATEUR POUR DÉTERMINER LA POSITION D'UN VÉHICULE SUIVANT

(30) Priorität: 26.03.2021 DE 102021203080
(43) Veröffentlichungstag der Anmeldung: 07.02.2024
(73) Patentinhaber: Continental Automotive Technologies GmbH, 30175 Hannover (DE)
(72) Erfinder: SENNINGER, Dominik, 60488 Frankfurt am Main (DE); GASDZIK, Danilo, 60488 Frankfurt am Main (DE)
(74) Vertreter: Aumovio Corporation
(86) Internationale Anmeldenummer: PCT/DE2022/200049
(87) Internationale Veröffentlichungsnummer: WO 2022/199764

(56) Entgegenhaltungen:
- WO-A1-2020/058463

## Beschreibung

Die Erfindung betrifft ein computer-implementiertes Verfahren zur Bewertung der Genauigkeit einer von einer Verarbeitungsvorrichtung definierten Schwarmtrajektorien-Position einer Schwarmtrajektorie auf einem definierten Fahrbahnabschnitt, ein computer-implementiertes Verfahren zum Ansteuern eines Nachfolgefahrzeuges auf einem definierten Fahrbahnabschnitt, in dem das Verfahren zur Bewertung der Genauigkeit verwendet wird, ein Steuersystem zum Ansteuern eines Nachfolgefahrzeuges sowie ein Computerprogrammprodukt, das zum Ausführungen der genannten Verfahren ausgebildet ist.

Auf dem Markt sind verschiedene GNSS (Globales Navigationssatellitensystem) - Empfänger erhältlich, die die eigenen Positionen bestimmen können. Manche dieser Empfänger liefern neben der gewünschten Position auch Informationen zu der Genauigkeit der Position, wobei dieser Wert oft ungenau ist. Außerdem besteht die Problematik, dass unterschiedliche Hersteller dieser Empfänger oft verschiedene Methoden zur Berechnung der Genauigkeit einsetzen und diese somit nicht vergleichbar sind.

Die WO 2020 / 058 463 A1 offenbart ein Verfahren zum Bereitstellen einer Fahrwegsvorgabe für ein Fahrwegsystem eines Fahrzeuges, welches die folgenden Schritte umfasst: - Bereitstellen von einer Mehrzahl von erfassten Trajektorien weiterer Fahrzeuge in einem zu befahrenden Wegabschnitt, - Ermitteln einer Trajektorienvorgabe aus den erfassten Trajektorien, - Ermitteln einer Abweichungszone aus den erfassten Trajektorien, wobei die Abweichungszone bestimmt wird anhand einer Abweichung zumindest einzelner erfasster Trajektorien von der Trajektorienvorgabe, - Bestimmen der Fahrwegsvorgabe zumindest anhand der Trajektorienvorgabe und der Abweichungszone. Ferner betrifft die Erfindung ein Fahrwegsystem für ein Fahrzeug, aufweisend: - ein Empfangsmodul zum Empfang von erfassten Trajektorien in einem zu befahrenden Wegabschnitt, - eine Recheneinheit, an welche das Empfangsmodul die erfassten Trajektorien sendet, welche dazu geeignet ist, eine Trajektorienvorgabe aus den erfassten Trajektorien und eine Abweichungszone anhand einer Abweichung zumindest einzelner erfasster Trajektorien von der Trajektorienvorgabe zu ermitteln, und eine Fahrwegsvorgabe zumindest anhand der Trajektorienvorgabe und der Abweichungszone zu bestimmen.

Verwendet nun ein Algorithmus beispielsweise zur Bestimmung einer Position eines Fahrzeuges auf einem definierten Fahrbahnabschnitt neben der empfangenen Position auch ungenaue Werte zur Genauigkeit dieser Position, um beispielsweise Daten zu gewichten, führt dies zu ungenauen oder sogar falschen Ergebnissen. Aufgabe der Erfindung ist es daher, ein Verfahren vorzuschlagen, mit dem Werte einer Genauigkeit zu einer Position zuverlässiger bereitgestellt werden können.

Diese Aufgabe wird mit einem computer-implementierten Verfahren mit der Merkmalskombination des Anspruches 1 gelöst.

Ein computer-implementiertes Verfahren zum Ansteuern eines Nachfolgefahrzeuges auf einem definierten Fahrbahnabschnitt, ein Steuersystem zum Ansteuern eines Nachfolgefahrzeuges zum Befahren eines Fahrbahnabschnittes sowie ein Computerprogramm, das die Verfahren ausführen kann, sind Gegenstand der nebengeordneten Ansprüche.

Vorteilhafte Ausgestaltungen der Erfindung sind Gegenstand der abhängigen Ansprüche.

Ein computer-implementiertes Verfahren zur zur Ermittlung einer Position eines Nachfolgefahrzeuges auf einem definierten Fahrbahnabschnitt weist die folgenden Schritte auf:
- a) Erfassen einer Vielzahl von Egotrajektorien-Positionen von sich auf dem definierten Fahrbahnabschnitt bewegenden Egofahrzeugen,
- b) Erzeugen einer Schwarmtrajektorie mit einer Vielzahl von Schwarmtrajektorien-Positionen, wobei zu vordefinierten Schwarmtrajektorien-Werten y_{i, def} die zugehörigen Schwarmtrajektorien-Werte xᵢ aus der Vielzahl von Egotrajektorien-Werten xₙ gebildet werden;
- c) Bilden einer Standardabweichung σᵢ für jeden gebildeten Schwarmtrajektorien-Wert xᵢ der Schwarmtrajektorie;
- d) Speichern von Paaren der erzeugten Schwarmtrajektorien-Positionen und einem zugehörigen Genauigkeitskoeffizienten für jede Schwarmtrajektorien-Position, wobei die Genauigkeitskoeffizienten proportional sind zu den für jede Schwarmtrajektorien-Position gebildeten Standardabweichungen σᵢ,
- e) Empfangen aus wenigstens zwei unterschiedlichen Quellen von jeweils Paaren einer potentiellen Position des Nachfolgefahrzeuges auf dem definierten Fahrbahnabschnitt und einem zu der potentiellen Position zugehörigen, quellenspezifischen Genauigkeitskoeffizienten, wobei eine erste potentielle Position eine Schwarmtrajektorien-Position ist, und wobei ein erster Genauigkeitskoeffizient proportional zu der für die Schwarmtrajektorien-Position gebildeten Standardabweichung σᵢ ist, wobei die Schwarmtrajektorien-Position und der erste Genauigkeitskoeffizient gemäß den Schritten a) - d) erzeugt worden sind;
- f) Gewichten jeder der empfangenen potentiellen Positionen anhand der zugehörigen, quellenspezifischen Genauigkeitskoeffizienten;
- g) Ermitteln der Position des Nachfolgefahrzeuges durch Fusion der gewichteten potentiellen Positionen.

Schwarmtrajektorien sind im Wesentlichen Bewegungstrajektorien, die aus einer Fusion einer Vielzahl von Einzeltrajektorien gebildet werden, wobei jede Einzeltrajektorie einem einzelnen Fahrzeug zugeordnet ist, das sich auf dem definierten Fahrbahnabschnitt bewegt. Diese Einzeltrajektorien werden daher auch als Egotrajektorien bezeichnet und sind zugehörig zu den einzelnen Fahrzeugen, die auch als Egofahrzeuge bezeichnet werden.

Gemäß dem Verfahren wird demgemäß aus den Egotrajektorien der Egofahrzeuge, die sich auf dem definierten Fahrbahnabschnitt bewegen, und somit aus deren GNSS-Daten, die Schwarmtrajektorie erstellt. Die Schwarmtrajektorie ist im Wesentlichen gebildet aus einer Vielzahl von Schwarmtrajektorien-Positionen bzw. -Punkten (xᵢ, yᵢ). Für jeden dieser Punkte (xᵢ, yᵢ) werden nun die Schnittpunkte der Einzeltrajektorien, die zu Erstellung der Schwarmtrajektorie an dieser jeweiligen Position (xᵢ, yᵢ) beigetragen haben, senkrecht zur Fahrtrichtung des jeweiligen Egofahrzeuges berechnet. Das bedeutet, dass vordefinierte Schwarmtrajektorien-Werte y_{i,def} herangezogen werden, um an diesen Punkten in Fahrtrichtung die Standardabweichung σᵢ aus den Schwarmtrajektorien-Werten xᵢ zu bilden, die dem vordefinierten Schwarmtrajektorien-Wert y_{i,def} zugehörig sind. Die Standardabweichung σᵢ ist im Wesentlichen ein Maß für die Streuung dieser Werte xₘ, um den Wert xᵢ der betrachteten Schwarmtrajektorie. Diese Standardabweichung σᵢ kann betrachtet werden als ein Maß für die Genauigkeit, die an dieser betrachteten Schwarmtrajektorien-Position (xᵢ, yᵢ) üblicherweise von GNSS-Empfängern erreicht werden kann.

Nachdem ein Maß für die Genauigkeit in Form der Standardabweichung σᵢ ermittelt worden ist, kann dann die jeweils betrachtete Schwarmtrajektorien-Position (xᵢ, yᵢ) gemeinsam mit einem Genauigkeitskoeffizienten gespeichert werden. Der Genauigkeitskoeffizient kann dabei die Standardabweichung σᵢ selbst sein, es ist jedoch auch möglich, einen repräsentativen Faktor für die Standardabweichung σᵢ als Genauigkeitskoeffizienten abzuspeichern. Wird nicht die Standardabweichung σᵢ als Genauigkeitskoeffizient direkt gespeichert, sondern ein die Standardabweichung σᵢ repräsentierender Faktor, ist dieser als proportional zu der ermittelten Standardabweichung σᵢ anzusehen. Unter "proportional" soll dabei nicht nur das mathematische Verhältnis über einen konstanten Faktor gemeint sein, proportional kann im Sinne des oben beschriebenen Verfahrens auch bedeuten, dass die Standardabweichungswerte σᵢ in Gruppen zusammengefasst werden, um die Genauigkeit einer Position direkt zu bewerten, z. B. Gruppe "hohe Genauigkeit", "mittlere Genauigkeit", "schlechte Genauigkeit".

Die Paare aus der erzeugten Schwarmtrajektorien-Position und dem zugehörigen Genauigkeitskoeffizienten werden zusammen gespeichert, wobei unter Speichern auch das Eintragen in eine Karte verstanden werden soll, die einem Nachfolgefahrzeug zur Verfügung gestellt wird. Das Nachfolgefahrzeug ist dabei ein Fahrzeug, das allen Egofahrzeugen, aus deren Egotrajektorien die Schwarmtrajektorie gebildet worden ist, zeitlich nachfolgt.

Das Nachfolgefahrzeug kann demgemäß Zugriff auf eine derart gebildete Karte haben, auf die Karte können aber auch beispielsweise andere Services zugreifen, die z. B. für die Konsolidierung von auf dem definierten Fahrbahnabschnitt vorhandenen Verkehrsschildern verwendet werden.

Das beschriebene Verfahren bietet daher die Möglichkeit, Positionen oder sogar ganze Gebiete guter bzw. schlechter GNSS-Genauigkeit zu ermitteln. Diese Genauigkeiten können dann in anderen Algorithmen dazu verwendet werden, um die Genauigkeit oder eine Gewichtung abschätzen zu können.

Um eine möglichst realistische Position eines Nachfolgefahrzeuges auf einem definierten Fahrbahnabschnitt zu ermitteln, werden demgemäß aus zwei unterschiedlichen Quellen Daten herangezogen. Die erste Quelle ist dabei der Speicher, der die wie oben beschriebene Schwarmtrajektorien-Position zusammen mit dem zugehörigen Genauigkeitskoeffizienten gespeichert hat. Die zweite Quelle kann ein Sensor sein, der ebenfalls eine potentielle Position ermittelt und dabei einen zugehörigen Genauigkeitskoeffizienten ausgibt. Anhand dieser quellenspezifischen Genauigkeitskoeffizienten zu diesen potentiellen Positionen ist es nun möglich, die empfangenen potentiellen Positionen zu gewichten und aus diesen gewichteten potentiellen Positionen die Position des Nachfolgefahrzeuges zu ermitteln.

Der technische Vorteil im Nachfolgefahrzeuge besteht also darin, dass die Algorithmen, die aus den Werten eines oder mehrerer Sensoren die Position des Nachfolgefahrzeuges ermitteln, nun eine weitere Quelle für die Abschätzung der Genauigkeit von GNSS-Daten erhalten. Die Genauigkeit der jeweiligen Sensoren zu kennen ist wichtig, da bei der Fusion der Sensordaten eine Gewichtung stattfindet. Dabei werden Sensoren stärker gewichtet, die eine höhere Genauigkeit aufweisen. Steht dem Nachfolgefahrzeug nun die Information zur Verfügung, dass die Schwarmtrajektorien-Position mit einer hohen Genauigkeit zu bewerten ist, kann diese Information höher gewichtet werden als beispielsweise die potentiellen Positionen, die von den anderen Sensoren geliefert worden sind. Umgekehrt ist es jedoch auch möglich, wenn die GNSS-Position eine geringere Genauigkeit aufweist, dass die anderen Sensoren höher gewichtet werden. Insgesamt ist daher eine verbesserte Positionierung des Nachfolgefahrzeuges möglich.

Durch das beschriebene Verfahren ist es daher möglich, dass die Probleme der fehlerbehafteten Genauigkeitseinschätzung von handelsüblichen GNSS-Empfängern korrigiert werden können.

Das Nachfolgefahrzeug kann demgemäß Informationen auch aus mehreren Sensoren verarbeiten. Dabei ist es möglich, dass ein Paar aus einer zweiten potentiellen Position und einem zu der zweiten potentiellen Position zugehörigen, quellenspezifischen Genauigkeitskoeffizienten mit einem dem Nachfolgefahrzeug zugeordneten Sensor ermittelt wird. D. h. ein solcher Sensor ist im Nachfolgefahrzeug selbst angeordnet, beispielsweise eine Kamera.

In einer vorteilhaften Ausgestaltung des oben beschriebenen Verfahrens erfassen Sensoren der einzelnen sich auf dem definierten Fahrbahnabschnitt bewegenden Egofahrzeuge die Vielzahl von Egotrajektorien-Positionen und übermitteln die Vielzahl von Egotrajektorien-Positionen an eine außerhalb der Egofahrzeuge angeordnete Verarbeitungsvorrichtung, woraufhin die Verarbeitungsvorrichtung dann die Schwarmtrajektorie erzeugt.

In dieser vorteilhaften Ausgestaltung werden somit im Wesentlichen die Rohdaten an die Verarbeitungsvorrichtung übermittelt, so dass diese durch Durchführen mehrerer Rechenschritte die Schwarmtrajektorie mit einer Vielzahl von Schwarmtrajektorien-Positionen erzeugt.

In einer alternativen Ausgestaltung ist es jedoch auch möglich, dass die Sensoren der einzelnen sich auf dem definierten Fahrbahnabschnitt bewegenden Egofahrzeuge die Vielzahl von Egotrajektorien-Positionen erfassen und danach jedes Egofahrzeug aus seinen erfassten Egotrajektorien-Positionen seine Egotrajektorie erzeugt. Erst dann übermittelt jedes Egofahrzeug seine erzeugte Egotrajektorie an eine außerhalb der Egofahrzeuge angeordnete Verarbeitungsvorrichtung, wobei die Verarbeitungsvorrichtung dann aus diesen Egotrajektorien die Schwarmtrajektorie erzeugt. In dieser vorteilhaften alternativen Ausgestaltung werden also Teile des Rechenverfahrens zum Erzeugen der Schwarmtrajektorie in den Egofahrzeugen selbst durchgeführt.

Ein Nachfolgefahrzeug kann auf einem definierten Fahrbahnabschnitt mittels folgendener Schritte angesteuert werden:
- Erstellen einer Karte für den definierten Fahrbahnabschnitt mit Paaren aus Schwarmtrajektorien-Positionen und zugehörigen Genauigkeitskoeffizienten für jede Schwarmtrajektorien-Position, wie dies in dem obigen Verfahren beschrieben worden ist,
- Ansteuern eines Nachfolgefahrzeuges zum Befahren des Fahrbahnabschnittes basierend auf der erstellten Karte.

GNSS-Empfänger in solchen Nachfolgefahrzeugen schätzen ihre Genauigkeit nicht in allen Situationen korrekt ein, wobei diese Situationen jedoch meist örtlich reproduzierbar sind. Die oben beschriebene erstellte Karte enthält nun Informationen über die Genauigkeit von empfangenen Schwarmtrajektorien-Positionen und somit Informationen über Orte, an denen GNSS-Empfänger häufig ihre Genauigkeit als zu gut einschätzen. Steht dem Nachfolgefahrzeug nun diese Information aus der Karte zur Verfügung, kann das Ansteuern des Nachfolgefahrzeuges auf Basis dieser erstellten Karte genauer als bisher üblich erfolgen.

Dabei kann das Nachfolgefahrzeug mit einer Steuereinrichtung eines zumindest teilautonomen Fahrzeugsystems angesteuert werden. Insbesondere beim teilautonomen oder sogar autonomen Fahren ist es wichtig, die Zuverlässigkeit der für die Ansteuerung des Nachfolgefahrzeuges verarbeiteten Positionsdaten zu kennen, um so eine hochgenaue Ansteuerung eines fahrerlosen Nachfolgefahrzeuges zu ermöglich.

Alternativ ist es jedoch auch möglich, dass ein Nachfolgefahrzeug zwar von einem Fahrer gesteuert wird, jedoch eine Ausgabeeinheit eines Fahrerassistenzsystems vorhanden ist, die Steuervorgaben zum Ansteuern des Nachfolgefahrzeuges basierend auf der erstellten Karte ausgibt. Eine Implementierung eines solchen Systems könnte beispielsweise ein Navigationssystem sein.

Alternativ oder zusätzlich ist es jedoch auch möglich, dass die zweite potentielle Position und der dazugehörige quellenspezifische Genauigkeitskoeffizient mit einem Sensor einer Infrastruktur im Bereich des definierten Fahrbahnabschnittes ermittelt wird. D. h., dass es auch Sensoren außerhalb des Nachfolgefahrzeuges geben kann, die an, auf oder um den definierten Fahrbahnabschnitt angeordnet sind, und in der Lage sind, die zweite potentielle Position des Nachfolgefahrzeuges zu erfassen.

Bei einem computer-implementierten Verfahren zum Ansteuern eines Nachfolgefahrzeuges auf einem definierten Fahrbahnabschnitt wird dabei, wie oben beschrieben, zunächst eine Position des Nachfolgefahrzeuges auf dem definierten Fahrbahnabschnitt ermittelt, und dann das Nachfolgefahrzeug zum Befahren des Fahrbahnabschnittes basierend auf dieser ermittelten Position angesteuert.

Dabei ist es möglich, dass das Nachfolgefahrzeug mit einer Steuereinrichtung eines zumindest teilautonomen Fahrzeugsystems angesteuert wird. Es ist jedoch auch alternativ möglich, dass eine Ausgabeeinheit eines Fahrerassistenzsystems Steuervorgaben zum Ansteuern des Nachfolgefahrzeuges ausgibt.

Ein Steuersystem zum Ansteuern eines Nachfolgefahrzeuges zum Befahren eines Fahrbahnabschnittes weist eine Verarbeitungsvorrichtung auf, die zum Durchführen des Verfahrens zur Ermittlung einer Position eines Nachfolgefahrzeuges auf dem definierten Fahrbahnabschnitt wie oben beschrieben ausgebildet ist, und weist weiter eine Steuereinrichtung zum Ansteuern des Nachfolgefahrzeuges auf.

Ein vorteilhaftes Computerprogrammprodukt ist zum Ausführen des Verfahrens zur Bewertung der Genauigkeit der von einer Verarbeitungsvorrichtung definierten Schwarmtrajektorien-Position einer Schwarmtrajektorie auf einem definierten Fahrbahnabschnitt und/oder des Verfahrens zur Ermittlung einer Position eines Nachfolgefahrzeuges auf einem definierten Fahrbahnabschnitt ausgebildet.

Vorteilhafte Ausgestaltung der Erfindung werden nachfolgend anhand der beigefügten Zeichnungen näher erläutert. Dabei zeigt:
Fig. 1 eine schematische Draufsicht von oben auf einen definierten Fahrbahnabschnitt mit mehreren sich entlang Egotrajektorien bewegenden Egofahrzeugen, eine aus den Egotrajektorien gebildete Schwarmtrajektorie, und ein Nachfolgefahrzeug, das sich entlang der Schwarmtrajektorie bewegt.
Fig. 2 eine schematische Detaildarstellung eines ersten vorteilhaften Beispiels des Nachfolgefahrzeuges aus Fig. 1;
Fig. 3 eine schematische Darstellung eines zweiten vorteilhaften Beispiels des Nachfolgefahrzeuges aus Fig. 1;
Fig. 4 ein schematisches Flussdiagramm, in dem Schritte eines Verfahrens zur Bewertung der Genauigkeit einer von einer Verarbeitungsvorrichtung definierten Schwarmtrajektorien-Position der Schwarmtrajektorie auf dem definierten Fahrbahnabschnitt aus Fig. 1 dargestellt sind;
   und
Fig. 5 ein schematisches Flussdiagramm, das Schritte eines Verfahrens zur Ermittlung der Position des Nachfolgefahrzeuges auf dem definierten Fahrbahnabschnitt aus Fig. 1 darstellt.

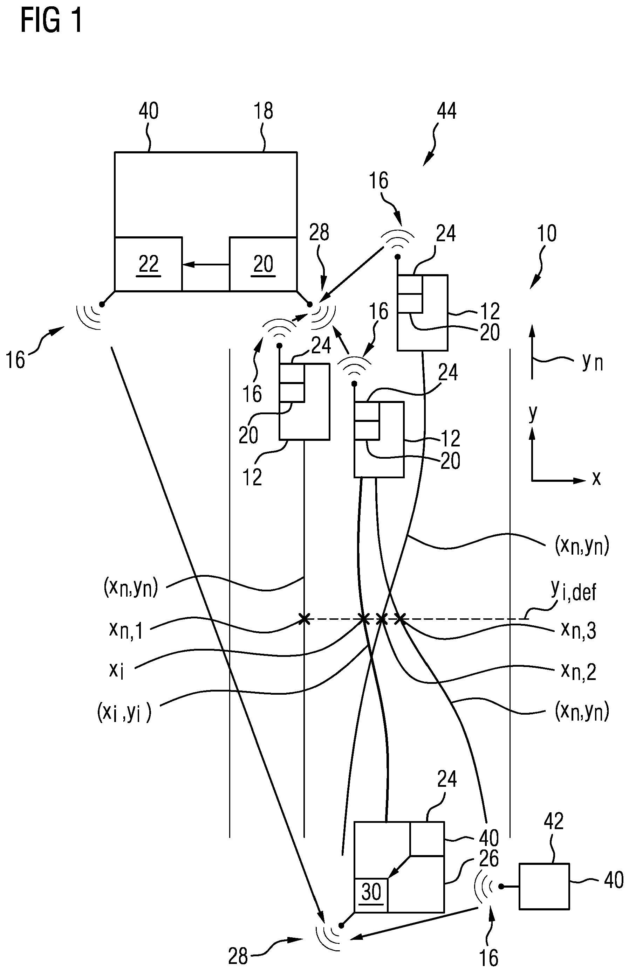

Fig. 1 zeigt eine schematische Draufsicht von oben auf einen definierten Fahrbahnabschnitt 10, auf dem sich mehrere Egofahrzeuge 12 entlang von ihnen zugeordneten Egotrajektorien (xₙ, yₙ) bewegen. Jede Egotrajektorie (xₙ, yₙ) ist dabei aus unendlich vielen Egotrajektorienpunkten gebildet, die sich zweidimensional aus den Werten xₙ und yₙ zusammensetzen, wobei yₙ Werte sind, die die Fahrtrichtung des jeweiligen Egofahrzeuges 12 repräsentieren. Die Werte xₙ sind relativ zu den Werten yₙ auf der senkrechten x-Achse dazu angeordnet (siehe kartesisches Koordinatensystem am Rand).

Aus einer Vielzahl solcher Egotrajektorien (xₙ, yₙ) wird eine Schwarmtrajektorie (xᵢ, yᵢ) gebildet, indem die Egotrajektorien (xₙ, yₙ) fusioniert werden. Damit ergeben sich auch für die Schwarmtrajektorie (xᵢ, yᵢ) eine Vielzahl an Schwarmtrajektorien-Punkten bzw. Schwarmtrajektorien-Positionen (xᵢ, yᵢ). Zum Bilden der Schwarmtrajektorie (xᵢ, yᵢ) werden der Einfachheit halber an vordefinierten Wertepositionen in Fahrrichtung yₙ der Egotrajektorien (xₙ, yₙ), die in Fig. 1 mit y_{1,def} bezeichnet sind, die x-Werte der Egotrajektorien (xₙ, yₙ), im Beispiel in Fig. 1 x_{n,1} der ersten Egotrajektorie, x_{n,2} der zweiten Egotrajektorie und xₙ,3 der dritten Egotrajektorie zu einem x-Wert xᵢ der Schwarmtrajektorie (xᵢ, yᵢ) gemittelt. Es werden demgemäß mehrere x-Werte von unterschiedlichen Egotrajektorien (xₙ, yₙ) verwendet, so dass es möglich ist, aus der Mehrzahl der x-Werte eine Standardabweichung σᵢ für den gebildeten Schwarmtrajektorien-Wert xᵢ der Schwarmtrajektorie (xᵢ, yᵢ) zu bilden.

In einem ersten in Fig. 1 gezeigten Beispiel senden für diese oben beschriebene Bildung der Schwarmtrajektorie (xᵢ, yᵢ) und der zugehörigen Standardabweichungen σᵢ die Egofahrzeuge 12 über entsprechende Sender 16 ihre Egotrajektorien-Positionen (xₙ, yₙ) an eine Verarbeitungsvorrichtung 18. Diese Verarbeitungsvorrichtung 18 empfängt die Egotrajektorien-Positionen (xₙ, yₙ) und ermittelt aus diesen Informationen die Schwarmtrajektorie (xᵢ, yᵢ) und die jeweils zugehörige Standardabweichung σᵢ in einem Verarbeitungsmodul 20. Je nach Implementierung wird die Standardabweichung σᵢ direkt als Genauigkeitskoeffizient K_{G} behandelt, der die Genauigkeit der ermittelten Schwarmtrajektorien-Positionen (xᵢ, yᵢ) angibt. Alternativ ist es jedoch auch möglich, die ermittelten Standardabweichungen σᵢ zu einem repräsentierenden Genauigkeitskoeffizienten K_{G} umzurechnen, der proportional zu den Standardabweichungen σᵢ ist. Dabei meint proportional nicht nur eine reine mathematische Proportionalität mit einem konstanten Faktor zur Umrechnung, es ist auch möglich, dass Gruppen von Standardabweichungen σᵢ zu Bewertungskriterien zusammengefasst werden, und diese dann als Genauigkeitskoeffizient K_{G} behandelt werden. Solche Gruppen können beispielsweise sein "hohe Genauigkeit", "mittlere Genauigkeit", "schlechte Genauigkeit".

Die Verarbeitungsvorrichtung 18 speichert dann die Paare der erzeugten Schwarmtrajektorien-Positionen (xᵢ, yᵢ) und die jeweils zugehörigen Genauigkeitskoeffizienten K_{G} in einer Speichereinrichtung 22. Dabei ist es möglich, dass diese Paare in Form einer Karte gespeichert werden, in der dann zu jeder erzeugten Schwarmtrajektorien-Position (xᵢ, yᵢ) der Genauigkeitskoeffizient K_{G} mit eingezeichnet ist.

Zum Erfassen der Egotrajektorien-Positionen (xₙ, yₙ) weisen die Egofahrzeuge 12, wie in Fig. 1 dargestellt, Sensoren 24 auf. Diese Sensoren 24 können beispielsweise Kameras sein, es ist jedoch auch möglich, dass die Egofahrzeuge 12 von einen Backend GPS Daten empfangen, so dass die Sensoren 24 in diesem Fall durch einen entsprechenden GPS-Empfänger ausgebildet sind.

Alternativ zu der Möglichkeit, dass sämtliche Rechenschritte in der Verarbeitungsvorrichtung 18 durchgeführt werden, ist es auch möglich, dass die Egofahrzeuge 12 zusätzlich zu ihren Sensoren 24 eigene Verarbeitungsmodule 20 aufweisen, wobei in diesen eigenen Verarbeitungsmodulen 20 aus den Egotrajektorien-Positionen (xₙ, yₙ) des jeweiligen Egofahrzeuges 12 die jeweilige Egotrajektorie (xₙ, yₙ) gebildet wird. Die so erzeugten Egotrajektorien (xₙ, yₙ) werden dann direkt an die Verarbeitungsvorrichtung 18 übermittelt, um dort die Schwarmtrajektorie (xᵢ, yᵢ) und die zugehörige Standardabweichung σᵢ zu ermitteln.

Hat nun die Verarbeitungsvorrichtung 18 in dem Verarbeitungsmodul 20 die Schwarmtrajektorie (xᵢ, yᵢ) und die zugehörige Standardabweichung σᵢ bzw. den zugehörigen Genauigkeitskoeffizienten K_{G} bestimmt und in der Speichereinrichtung 22 abgelegt, z.B. in Form eine Karte, ist es möglich, diese Information, beispielsweise die abgelegte Karte, an ein Nachfolgefahrzeug 26 zu senden, das den Egofahrzeugen 12 zeitlich auf dem definierten Fahrbahnabschnitt 10 nachfolgt. Das Nachfolgefahrzeug 26 empfängt über einen Empfänger 28 die gebildete Schwarmtrajektorie (xᵢ, yᵢ) und die zugehörigen Genauigkeitskoeffizienten K_{G}, und wird dann über eine Steuereinrichtung 30 basierend auf der empfangenen Karte angesteuert.

Die Steuereinrichtung 30 kann dabei Teil eines zumindest teilautonomen Fahrzeugsystems 32 sein, bei dem die Ansteuerung des Egofahrzeuges 12 teilautonom oder vollautonom über eine Steuereinheit 34 erfolgt, oder die Steuereinrichtung 30 kommuniziert mit einer Ausgabeeinheit 36 eines Fahrerassistenzsystems 38, die einem Fahrer des Nachfolgefahrzeuges 26 Steuervorgaben ausgibt, beispielsweise über ein Navigationssystemdisplay.

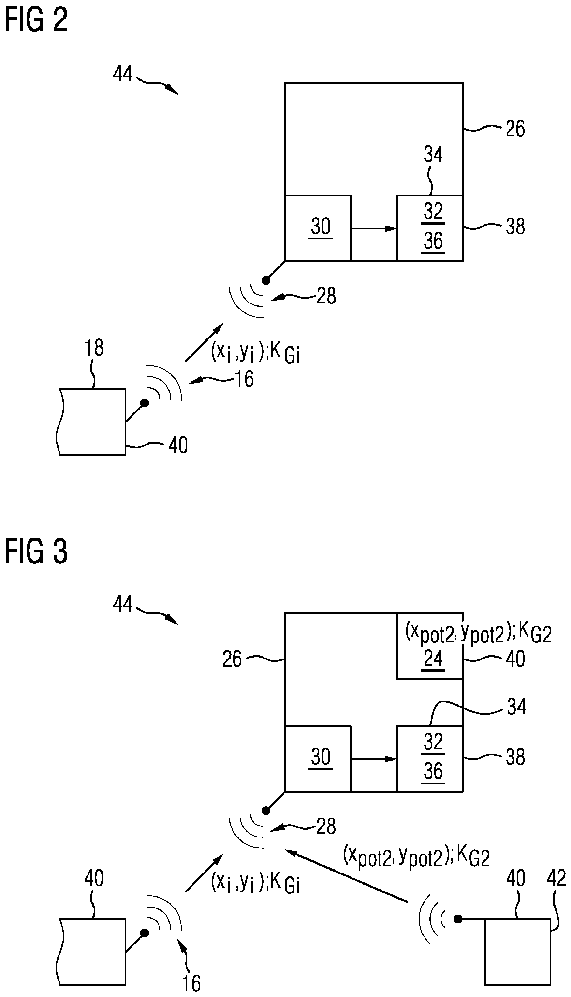

Das Nachfolgefahrzeug 26 ist in einer schematischen Detaildarstellung eines ersten vorteilhaften Beispiels des Nachfolgefahrzeuges 26 in Fig. 2 gezeigt.

Fig. 3 zeigt eine schematische Detaildarstellung eines zweiten vorteilhaften Beispiels des Nachfolgefahrzeuges 26 aus Fig. 1, bei dem die Steuereinrichtung 30 dazu ausgebildet ist, eine Position des Nachfolgefahrzeuges 26 auf dem definierten Fahrbahnabschnitt 10 zu ermitteln. Dazu zieht die Steuereinrichtung 30 nicht nur, wie bereits oben beschrieben, die von der Verarbeitungsvorrichtung 18 empfangene Schwarmtrajektorie (xᵢ, yᵢ) und deren zugehörigen Genauigkeitskoeffizienten K_{G,i} heran, sondern nutzt auch aus einer zweiten Quelle 40 Daten, die in Zusammenhang mit der Position des Nachfolgefahrzeuges 26 stehen. Demgemäß empfängt die Steuereinrichtung 30 aus wenigstens zwei unterschiedlichen Quellen 40 jeweils eine potentielle Position (xₚₒₜ, yₚₒₜ) des Nachfolgefahrzeuges 26, gewichtet diese potentiellen Positionen (xₚₒₜ, yₚₒₜ) aufgrund ihrer zugehörigen Genauigkeitskoeffizienten K_{G} und ermittelt dann durch Fusion die Position des Nachfolgefahrzeuges 26. Wie in Fig. 3 dargestellt, kann die zweite Quelle 40 beispielsweise ein Sensor 24 des Nachfolgefahrzeuges 26 sein, wie beispielsweise eine Kamera, es ist jedoch auch möglich, dass die empfangenen Informationen, die verarbeitet werden, aus einem Sensor 24 stammen, der einer Infrastruktur 42 zugeordnet ist, die im Bereich des definierten Fahrbahnabschnittes 10 angeordnet ist. Dabei kann es sich beispielsweise ebenfalls um eine Kamera handeln, die im Bereich des Fahrbahnabschnittes 10 aufgestellt oder fest installiert ist.

Basierend auf der so ermittelten Position des Nachfolgefahrzeuges 26 kann dann die Steuereinrichtung 30 wie in dem in Bezug auf Fig. 2 beschriebenen ersten Beispiel das Nachfolgefahrzeug 26 ansteuern.

Insgesamt ist also mit Bezug auf die Fig. 1 bis 3 ein Steuersystem 44 beschrieben, mit dem über die Verarbeitungsvorrichtung 18 und die Steuereinrichtung 30 das Nachfolgefahrzeug 26 zuverlässiger als bisher bekannt angesteuert werden kann.

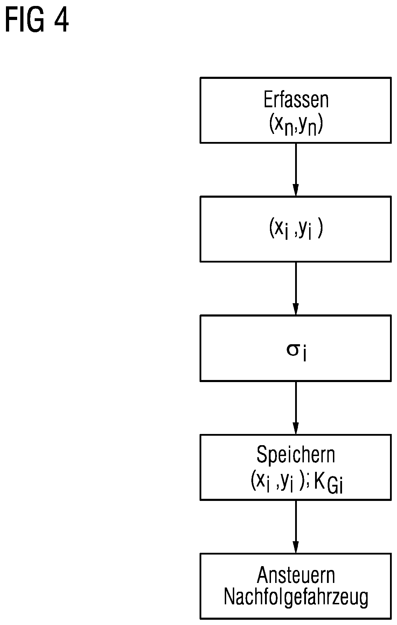

In Bezug auf diese Ansteuerung ist in Fig. 4 ein schematisches Flussdiagramm gezeigt, das Schritte eines Verfahrens zur Bewertung der Genauigkeit einer von der Verarbeitungsvorrichtung 18 definierten Schwarmtrajektorien-Position (xᵢ, yᵢ) bewertet. Dabei werden in einem ersten Schritt eine Vielzahl von Egotrajektorien (xₙ, yₙ) von einer Vielzahl von Egofahrzeugen 12 erfasst. Im nächsten Schritt wird dann aus diesen Egotrajektorien (xₙ, yₙ) die Schwarmtrajektorie (xᵢ, yᵢ) gebildet. Im darauffolgenden Schritt wird die Standardabweichung σᵢ für jeden gebildeten Schwarmtrajektorien-Wert xᵢ der Schwarmtrajektorie (xᵢ, yᵢ) gebildet.

In einem weiteren Schritt werden dann Paare gespeichert, die sich zusammensetzen aus der erzeugten Schwarmtrajektorien-Position (xᵢ, yᵢ) und einem zugehörigen Genauigkeitskoeffizient K_{G,i}, wobei das Speichern beispielsweise in einer Karte erfolgen kann. In einem letzten Schritt wird dann ein Nachfolgefahrzeug 26 auf Basis der Kartendaten angesteuert.

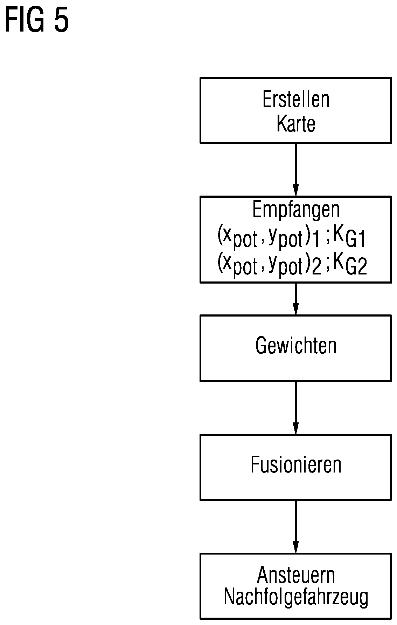

Mit Bezug auf eine Positionierung des Nachfolgefahrzeuges 26 auf dem definierten Fahrbahnabschnitt 10 zeigt Fig. 5 ein schematisches Flussdiagramm mit Schritten eines Verfahrens zur Ermittlung der Position des Nachfolgefahrzeuges 26 auf dem definierten Fahrbahnabschnitt 10. In einem ersten Schritt wird dabei, wie mit Bezug auf Fig. 4 beschrieben, eine Karte erstellt. In einem nächsten Schritt empfängt dann das Nachfolgefahrzeuges 26 aus wenigsten zwei Quellen 40 potentielle Positionen (xₚₒₜ, yₚₒₜ) mit zugehörigen Genauigkeitskoeffizienten K_{G}. In einem weiteren Schritt werden dann diese empfangenen potentiellen Positionen (xₚₒₜ, yₚₒₜ) auf Basis der Genauigkeitskoeffizienten K_{G} gewichtet und dann in einem weiteren Schritt zu der Position des Nachfolgefahrzeuges 26 fusioniert. Basierend auf der so ermittelten Position des Nachfolgefahrzeuges 26 kann das Nachfolgefahrzeug 26 dann über die Steuereinrichtung 30 angesteuert werden.

### Bezugszeichenliste

- 10: Fahrbahnabschnitt
- 12: Egofahrzeug
- 16: Sender
- 18: Verarbeitungsvorrichtung
- 20: Verarbeitungsmodul
- 22: Speichereinrichtung
- 24: Sensor
- 26: Nachfolgefahrzeug
- 28: Empfänger
- 30: Steuereinrichtung
- 32: (teil-)autonomes Fahrzeugsystem
- 34: Steuereinheit
- 36: Ausgabeeinheit
- 38: Fahrerassistenzsystem
- 40: Quelle
- 42: Infrastruktur
- 44: Steuerstystem
- K_{G}: Genauigkeitskoeffizient
- σᵢ: Standardabweichung
- (xₙ, yₙ): Egotrajektorie
- (xᵢ, yᵢ): Schwarmtrajektorie
- (xₚₒₜ, yₚₒₜ): potentielle Position
- yₙ: Fahrtrichtung
- y_{1,def}: vordefinierte Werteposition in Fahrrichtung yₙ
- x_{n,1}: x-Wert der Egotrajektorie (xₙ, yₙ)

## Patentansprüche

1. Computer-implementiertes Verfahren zur Ermittlung einer Position eines Nachfolgefahrzeuges (26) auf einem definierten Fahrbahnabschnitt (10), aufweisend die Schritte:
- a) Erfassen einer Vielzahl von Egotrajektorien-Positionen (xₙ, yₙ) von sich auf dem definierten Fahrbahnabschnitt (10) bewegenden Egofahrzeugen (12);
- b) Erzeugen einer Schwarmtrajektorie (xᵢ, yᵢ) mit einer Vielzahl von Schwarmtrajektorien-Positionen (xᵢ, yᵢ), wobei zu vordefinierten Schwarmtrajektorien-Werten (y_{i, def}) die zugehörigen Schwarmtrajektorien-Werte (xᵢ) aus der Vielzahl von Egotrajektorien-Werten (xₙ) gebildet werden;
- c) Bilden einer Standardabweichung (σᵢ) für jeden gebildeten Schwarmtrajektorien-Wert (xᵢ) der Schwarmtrajektorie (xᵢ, yᵢ);
- d) Speichern von Paaren der erzeugten Schwarmtrajektorien-Positionen (xᵢ, yᵢ) und einem zugehörigen Genauigkeitskoeffizienten (K_{G}) für jede Schwarmtrajektorien-Position (xᵢ, yᵢ), wobei die Genauigkeitskoeffizienten (K_{G}) proportional sind zu den für jede Schwarmtrajektorien-Position (xᵢ, yᵢ) gebildeten Standardabweichungen (σᵢ),
**gekennzeichnet durch folgende weitere Schritte:**
- e) Empfangen aus wenigstens zwei unterschiedlichen Quellen von jeweils Paaren einer potentiellen Position (xₚₒₜ, yₚₒₜ) des Nachfolgefahrzeuges (26) auf dem definierten Fahrbahnabschnitt (10) und einem zu der potentiellen Position (xₚₒₜ, yₚₒₜ) zugehörigen, quellenspezifischen Genauigkeitskoeffizienten (K_{G}), wobei eine erste potentielle Position (xₚₒₜ₁,yₚₒₜ₁) eine Schwarmtrajektorien-Position (xᵢ, yᵢ) ist, und wobei ein erster Genauigkeitskoeffizient (K_{G1}) proportional zu der für die Schwarmtrajektorien-Position (xᵢ, yᵢ) gebildeten Standardabweichung (σᵢ) ist, wobei die Schwarmtrajektorien-Position (xᵢ, yᵢ) und der erste Genauigkeitskoeffizient (K_{G1}) gemäß den Schritten a) - d) erzeugt worden sind;
- f) Gewichten jeder der empfangenen potentiellen Positionen (xₚₒₜ, yₚₒₜ) anhand der zugehörigen, quellenspezifischen Genauigkeitskoeffizienten (K_{G});
- g) Ermitteln der Position des Nachfolgefahrzeuges (26) durch Fusion der gewichteten potentiellen Positionen (xₚₒₜ, yₚₒₜ).

2. Computer-implementiertes Verfahren nach Anspruch 1, wobei zum Erzeugen der Schwarmtrajektorie (xᵢ, yᵢ) mit einer Vielzahl von Schwarmtrajektorien-Positionen (xᵢ, yᵢ) Sensoren (24) der einzelnen sich auf dem definierten Fahrbahnabschnitt (10) bewegenden Egofahrzeuge (12) die Vielzahl von Egotrajektorien-Positionen (xₙ, yₙ) erfassen, die Vielzahl von Egotrajektorien-Positionen (xₙ, yₙ) an eine außerhalb der Egofahrzeuge (12) angeordnete Verarbeitungsvorrichtung (18) übermitteln, und die Verarbeitungsvorrichtung (18) die Schwarmtrajektorie (xᵢ, yᵢ) erzeugt.

3. Computer-implementiertes Verfahren nach Anspruch 1, wobei zum Erzeugen der Schwarmtrajektorie (xᵢ, yᵢ) mit einer Vielzahl von Schwarmtrajektorien-Positionen (xᵢ, yᵢ) Sensoren (24) der einzelnen sich auf dem definierten Fahrbahnabschnitt (10) bewegenden Egofahrzeuge (12) die Vielzahl von Egotrajektorien-Positionen (xₙ, yₙ) erfassen, jedes Egofahrzeug (12) aus seinen erfassten Egotrajektorien-Positionen (xₙ, yₙ) seine Egotrajektorie (xₙ, yₙ) erzeugt, jedes Egofahrzeug (12) seine erzeugte Egotrajektorie (xₙ, yₙ) an eine außerhalb der Egofahrzeuge (12) angeordnete Verarbeitungsvorrichtung (18) übermittelt, und die Verarbeitungsvorrichtung (18) aus den Egotrajektorien (xₙ, yₙ) die Schwarmtrajektorie (xᵢ, yᵢ) erzeugt.

4. Computer-implementiertes Verfahren nach Anspruch 1, wobei ein Paar aus einer zweiten potentiellen Position (xₚₒₜ₂,yₚₒₜ₂) und einem zu der zweiten potentiellen Position (xₚₒₜ₂, yₚₒₜ₂) zugehörigen, quellenspezifischen Genauigkeitskoeffizienten (K_{G2}) mit einem dem Nachfolgefahrzeug (26) zugeordneten Sensor (24) oder mit einem Sensor (24) einer Infrastruktur (42) im Bereich des definierten Fahrbahnabschnittes (10) ermittelt wird.

5. Computer-implementiertes Verfahren zum Ansteuern eines Nachfolgefahrzeuges (10) auf einem definierten Fahrbahnabschnitt (10), aufweisend die Schritte:
- Ermitteln einer Position des Nachfolgefahrzeuges (26) auf dem definierten Fahrbahnabschnitt (10), indem ein Verfahren nach Anspruch 1 durchgeführt wird;
- Ansteuern eines Nachfolgefahrzeuges (26) zum Befahren des Fahrbahnabschnittes (10) basierend auf der ermittelten Position.

6. Computer-implementiertes Verfahren nach Anspruch 5, wobei das Nachfolgefahrzeug (26) mit einer Steuereinrichtung (30) eines zumindest teilautonomen Fahrzeugsystems (32) angesteuert wird oder wobei eine Ausgabeeinheit (36) eines Fahrerassistenzsystems (38) Steuervorgaben zum Ansteuern des Nachfolgefahrzeugs (26) ausgibt.

7. Steuersystem (44) zum Ansteuern eines Nachfolgefahrzeuges (26) zum Befahren eines Fahrbahnabschnittes (10), aufweisend eine Verarbeitungsvorrichtung (18), die zum Durchführen eines Verfahrens nach einem der Ansprüche 1 oder 4 ausgebildet ist, und eine Steuereinrichtung (30), die zum Ansteuern des Nachfolgefahrzeuges (26) gemäß einem der Ansprüche 5 oder 6 ausgebildet ist.

8. Computerprogrammprodukt, das zum Ausführen der Verfahren nach einem der Ansprüche 1 bis 6 ausgebildet ist.

## Claims

1. Computer-implemented method for determining a position of a trailing vehicle (26) on a defined road section (10), having the following steps:
- a) capturing a multiplicity of ego trajectory positions (xₙ, yₙ) of ego vehicles (12) moving on the defined road section (10);
- b) generating a swarm trajectory (xᵢ, yᵢ) having a multiplicity of swarm trajectory positions (xᵢ, yᵢ), wherein, for predefined swarm trajectory values (y_{i, def}), the associated swarm trajectory values (xᵢ) are formed from the multiplicity of ego trajectory values (xₙ);
- c) forming a standard deviation (σᵢ) for each formed swarm trajectory value (xᵢ) of the swarm trajectory (xᵢ, yᵢ);
- d) storing pairs of the generated swarm trajectory positions (xᵢ, yᵢ) and an associated accuracy coefficient (K_{G}) for each swarm trajectory position (xᵢ, yᵢ), wherein the accuracy coefficients (K_{G}) are proportional to the standard deviations (σᵢ) formed for each swarm trajectory position (xᵢ, yᵢ),
**characterized by** the following further steps of:
- e) receiving, from at least two different sources, respective pairs of a potential position (xₚₒₜ, yₚₒₜ) of the trailing vehicle (26) on the defined road section (10) and a source-specific accuracy coefficient (K_{G}) associated with the potential position (xₚₒₜ, yₚₒₜ), wherein a first potential position (x_{Pot1},y_{Pot1}) is a swarm trajectory position (xᵢ, yᵢ), and wherein a first accuracy coefficient (K_{G1}) is proportional to the standard deviation (σᵢ) formed for the swarm trajectory position (xᵢ, yᵢ), wherein the swarm trajectory position (xᵢ, yᵢ) and the first accuracy coefficient (K_{G1}) were generated in accordance with steps a) - d);
- f) weighting each of the received potential positions (xₚₒₜ, yₚₒₜ) based on the associated, source-specific accuracy coefficients (K_{G});
- g) determining the position of the trailing vehicle (26) by fusing the weighted potential positions (xₚₒₜ, yₚₒₜ).

2. Computer-implemented method according to Claim 1, wherein, in order to generate the swarm trajectory (xᵢ, yᵢ) having a multiplicity of swarm trajectory positions (xᵢ, yᵢ), sensors (24) of the individual ego vehicles (12) moving on the defined road section (10) capture the multiplicity of ego trajectory positions (xₙ, yₙ) and transmit the multiplicity of ego trajectory positions (xₙ, yₙ) to a processing device (18) arranged outside the ego vehicles (12), and the processing device (18) generates the swarm trajectory (xᵢ, yᵢ).

3. Computer-implemented method according to Claim 1, wherein, in order to generate the swarm trajectory (xᵢ, yᵢ) having a multiplicity of swarm trajectory positions (xᵢ, yᵢ), sensors (24) of the individual ego vehicles (12) moving on the defined road section (10) capture the multiplicity of ego trajectory positions (xₙ, yₙ), each ego vehicle (12) generates its ego trajectory (xₙ, yₙ) from its captured ego trajectory positions (xₙ, yₙ), each ego vehicle (12) transmits its generated ego trajectory (xₙ, yₙ) to a processing device (18) arranged outside the ego vehicles (12), and the processing device (18) generates the swarm trajectory (xᵢ, yᵢ) from the ego trajectories (xₙ, yₙ).

4. Computer-implemented method according to Claim 1, wherein a pair of a second potential position (xₚₒₜ₂, yₚₒₜ₂) and a source-specific accuracy coefficient (K_{G2}) associated with the second potential position (xₚₒₜ₂, yₚₒₜ₂) is determined using a sensor (24) assigned to the trailing vehicle (26) or using a sensor (24) of an infrastructure (42) in the region of the defined road section (10).

5. Computer-implemented method for controlling a trailing vehicle (10) on a defined road section (10), having the following steps:
- determining a position of the trailing vehicle (26) on the defined road section (10) by performing a method according to Claim 1;
- controlling a trailing vehicle (26) so as to drive on the road section (10) based on the determined position.

6. Computer-implemented method according to Claim 5, wherein the trailing vehicle (26) is controlled using a controller (30) of an at least partially autonomous vehicle system (32), or wherein an output unit (36) of a driver assistance system (38) outputs control specifications for controlling the trailing vehicle (26).

7. Control system (44) for controlling a trailing vehicle (26) so as to drive on a road section (10), having a processing device (18) that is designed to perform a method according to either of Claims 1 and 4, and a controller (30) that is designed to control the trailing vehicle (26) according to either of Claims 5 and 6.

8. Computer program product that is designed to perform the methods according to one of Claims 1 to 6.

## Revendications

1. Procédé mis en œuvre par ordinateur pour déterminer la position d'un véhicule suiveur (26) sur un tronçon de voie défini (10), comprenant les étapes :
- a) détection d'une pluralité de positions de trajectoires individuelles (xₙ, yₙ) de véhicules individuels (12) se déplaçant sur le tronçon de voie défini (10) ;
- b) génération d'une trajectoire collective (xᵢ, yᵢ) avec une pluralité de positions de trajectoires collectives (xᵢ, yᵢ), les valeurs de trajectoires collectives (xi) associées étant formées à partir de la pluralité de valeurs de trajectoires individuelles (xᵢ) pour des valeurs de trajectoires collectives prédéfinies (y_{i, def}) ;
- c) formation d'un écart-type (σᵢ) pour chaque valeur de trajectoire collective (xᵢ) formée de la trajectoire collective (xᵢ, yᵢ);
- d) enregistrement de paires des positions de trajectoire collective générées (xᵢ, yᵢ) et d'un coefficient de précision (K_{G}) correspondant pour chaque position de trajectoire collective (xᵢ, yᵢ), les coefficients de précision (K_{G}) étant proportionnels aux écarts-types (σᵢ) formés pour chaque position de trajectoire collective (xᵢ, yᵢ),
**caractérisé par** les étapes supplémentaires suivantes :
- e) réception, à partir d'au moins deux sources différentes, de paires d'une position potentielle (xₚₒₜ, yₚₒₜ) du véhicule suiveur (26) sur le tronçon de voie défini (10) et d'un coefficient de précision (K_{G}) spécifique à la source, associé à la position potentielle (xₚₒₜ, yₚₒₜ), une première position potentielle (x_{Pot1},y_{Pot1}) étant une position de trajectoire collective (xᵢ, yᵢ) et un premier coefficient de précision (K_{G1}) étant proportionnel à l'écart-type (σᵢ) formé pour la position de trajectoire collective (xᵢ, yᵢ), la position de la trajectoire collective (xᵢ, yᵢ) et le premier coefficient de précision (K_{G1}) ayant été générés conformément aux étapes a) à d) ;
- f) pondération, au moyen des coefficients de précision (K_{G}) associés, spécifiques à la source, de chacune des positions potentielles (xₚₒₜ, yₚₒₜ) reçues ;
- g) détermination de la position du véhicule suiveur (26) par fusion des positions potentielles pondérées (xₚₒₜ, yₚₒₜ).

2. Procédé mis en œuvre par ordinateur selon la revendication 1, dans lequel, pour générer la trajectoire collective (xᵢ, yᵢ) avec une pluralité de positions de trajectoire collective (xᵢ, yᵢ), des capteurs (24) des différents véhicules individuels (12) se déplaçant sur le tronçon de voie défini (10) détectent la pluralité de positions de trajectoire individuelle (xₙ, yₙ), transmettent la pluralité de positions de trajectoires individuelles (xₙ, yₙ) à un dispositif de traitement (18) agencé à l'extérieur des véhicules autonomes (12), et le dispositif de traitement (18) génère la trajectoire collective (xᵢ, yᵢ).

3. Procédé mis en œuvre par ordinateur selon la revendication 1, dans lequel, pour générer la trajectoire collective (xᵢ, yᵢ) avec une pluralité de positions de trajectoires collectives (xᵢ, yᵢ) des capteurs (24) des différents véhicules autonomes (12) se déplaçant sur le tronçon de voie défini (10) détectent la pluralité de positions de trajectoires individuelles (xₙ, yₙ), chaque véhicule autonome (12) génère sa trajectoire individuelle (xₙ, yₙ) à partir de ses positions de trajectoires individuelles détectées (xₙ, yₙ), chaque véhicule individuel (12) transmet sa trajectoire individuelle générée (xₙ, yₙ) à un dispositif de traitement (18) agencé à l'extérieur des véhicules individuels (12), et le dispositif de traitement (18) génère la trajectoire collective (xᵢ, yᵢ) à partir des trajectoires individuelles (xₙ, yₙ).

4. Procédé mis en œuvre par ordinateur selon la revendication 1, dans lequel une paire composée d'une deuxième position potentielle (xₚₒₜ₂, yₚₒₜ₂) et d'un coefficient de précision (K_{G2}) associé à la deuxième position potentielle (xₚₒₜ₂, yₚₒₜ₂) et spécifique à la source, est déterminée au moyen d'un capteur (24) associé au véhicule suiveur (26) ou au moyen d'un capteur (24) d'une infrastructure (42) situé dans la zone du tronçon de voie défini (10).

5. Procédé mis en œuvre par ordinateur pour commander un véhicule suiveur (10) sur un tronçon de chaussée défini (10), comprenant les étapes suivantes :
- détermination d'une position du véhicule suiveur (26) sur le tronçon de voie défini (10) en mettant en œuvre un procédé selon la revendication 1 ;
- commande d'un véhicule suiveur (26) pour circuler sur le tronçon de voie (10) en fonction de la position déterminée.

6. Procédé mis en œuvre par ordinateur selon la revendication 5, dans lequel le véhicule suiveur (26) est commandé par un dispositif de commande (30) d'un système de véhicule au moins partiellement autonome (32) ou dans lequel une unité d'émission (36) d'un système d'assistance à la conduite (38) émet des instructions de commande pour commander le véhicule suiveur (26).

7. Système de commande (44) pour commander un véhicule suiveur (26) afin qu'il circule sur un tronçon de voie (10), comprenant un dispositif de traitement (18) qui est conçu pour mettre en œuvre un procédé selon l'une des revendications 1 ou 4, et un dispositif de commande (30) qui est conçu pour commander le véhicule suiveur (26) conformément à l'une des revendications 5 ou 6.

8. Produit de programme d'ordinateur conçu pour mettre en œuvre le procédé selon l'une des revendications 1 à 6.
